# EUROPEAN PATENT SPECIFICATION

(11) **EP 4 386 365 B1**
(45) Date of publication and mention of the grant of the patent: **21.10.2026**
(21) Application number: 22944343.7
(22) Date of filing: 02.06.2022
(51) Int. Cl.: H01M 10/42, G01B 11/06, G01N 21/95, H01M 10/48, H01M 10/04

(54) **BATTERY CELL DETECTION METHOD, DEVICE AND SYSTEM, AND PROCESSOR AND CONTROLLER**
BATTERIEZELLENERKENNUNGSVERFAHREN, -VORRICHTUNG UND -SYSTEM SOWIE PROZESSOR UND STEUERGERÄT
PROCÉDÉ, DISPOSITIF ET SYSTÈME DE DÉTECTION DE CELLULE DE BATTERIE, ET PROCESSEUR ET DISPOSITIF DE COMMANDE

(43) Date of publication of application: 19.06.2024
(73) Proprietor: Contemporary Amperex Technology (Hong Kong) Limited, Central, Central And Western District (HK)
(72) Inventor: FAN, Xiaoyun, Ningde, Fujian 352100 (CN); HU, Ruixiang, Ningde, Fujian 352100 (CN); FU, Yuanqiao, Ningde, Fujian 352100 (CN); CHEN, Wu, Ningde, Fujian 352100 (CN); WANG, Chongxi, Ningde, Fujian 352100 (CN); HUANG, Jiebin, Ningde, Fujian 352100 (CN); HU, Jingyu, Ningde, Fujian 352100 (CN); WANG, Yanming, Ningde, Fujian 352100 (CN); WANG, Yuan, Ningde, Fujian 352100 (CN); XIE, Guotao, Ningde, Fujian 352100 (CN)
(74) Representative: Gong, Jinping
(86) International application number: PCT/CN2022/096958
(87) International publication number: WO 2023/231015

(56) References cited:
- EP-A1- 3 988 894
- CN-A- 106 442 557
- CN-A- 110 068 296
- CN-A- 111 193 072
- CN-A- 113 376 177
- CN-A- 113 390 351
- CN-A- 113 820 333
- KR-A- 20170 103 341
- KR-A- 20220 031 440
- KR-A- 20220 031 440
- KR-B1- 102 133 915
- KR-B1- 102 187 988

## Description

### TECHNICAL FIELD

This application relates to the technical field of cell detection, and in particular, to a cell detection method, device and system, as well as a processor and a controller.

### BACKGROUND

To provide reliable quality of battery cells before shipment, the battery cells need to be detected before being delivered from the factory. Currently, some battery cells are manually detected by visual inspection personnel. However, the efficiency of such a detection method is relatively low, and the detection criteria may vary between different visual inspection personnel.

KR 2022 0031440 A describes a device for inspecting electrode alignment of a battery cell, which is assembled by alternately stacking a plurality of positive electrodes, a plurality of negative electrodes, and a separator. The device includes a laser sensor unit that measures a profile based on a distance by scanning a side portion of the battery cell with laser; a control unit that grasps distances between the positive electrodes, the negative electrodes, and the separator stacked on the side portion of the battery cell based on the profile measured by the laser sensor unit, and analyzes the distance to determine good/poor according to a mutual alignment inspection; and a display unit that displays an image of the side portion scanned by the laser sensor unit and a good/poor determination result.

### SUMMARY

The invention is defined by the appended claims. The described embodiments of the present disclosure are not to be regarded as necessarily defining the invention unless they fall within the scope of the appended claims. Embodiments not falling within the terms of the claims are to be understood as background art or examples useful for understanding the invention.

An objective of some embodiments of this application is to provide a cell detection method, device and system as well as a processor and a controller to alleviate the disadvantages in existing cell detection.

According to a first aspect there is provided a battery cell detection method according to the independent claim 1.

According to a second aspect there is provided a controller according to the independent claim 11.

The dependent claims describe advantageous embodiments.

The battery cell detection method, the controller and the system according to some embodiments of this application can improve the safety of the pre-delivery cells by detecting the target cell. Further, by virtue of automation, the detection method is more efficient than manual detection. In addition, by comparing the data with the standard data, the accuracy of cell detection results and the unification of detection criteria can be improved.

To make the objectives, features, and advantages of this application clearer and easily comprehensible, the following gives a detailed description of embodiments with reference to accompanying drawings.

### BRIEF DESCRIPTION OF DRAWINGS

To describe technical solutions in embodiments of this application more clearly, the following outlines the drawings to be used in the embodiments. Understandably, the following drawings show merely some embodiments of this application. A person of ordinary skill in the art may derive other related drawings from the drawings without making any creative efforts.
FIG. 1 is a schematic diagram of interaction of a cell detection system according to an embodiment of this application;
FIG. 2 is a schematic block diagram of a controller according to an embodiment of this application;
FIG. 3 is a flowchart of a cell detection method according to an embodiment of this application;
FIG. 4a is a schematic structural diagram of a cell according to an embodiment of this application;
FIG. 4b is a schematic structural diagram of another cell according to an embodiment of this application;
FIG. 4c is a schematic structural diagram of still another cell according to an embodiment of this application;
FIG. 5 is a flowchart of another cell detection method according to an embodiment of this application;
FIG. 6 is a flowchart of still another cell detection method according to an embodiment of this application;
FIG. 7 is a partial flowchart of a cell detection method according to an embodiment of this application;
FIG. 8a shows a schematic interface of a piece of detection data of a cell;
FIG. 8b shows a schematic interface of another piece of detection data of a cell;
FIG. 9 is a partial flowchart of a cell detection method according to an embodiment of this application;
FIG. 10 is a partial flowchart of a cell detection method according to an embodiment of this application; and
FIG. 11 is a schematic diagram of functional modules of a cell detection device according to an embodiment of this application.

List of reference numerals: 110-controller; 111-memory; 113-processor; 120-sensor; 121-first sensor; 122-second sensor; 130-bracket; 140-graduated scale; 150-carrier device.

### DETAILED DESCRIPTION OF EMBODIMENTS

The following describes technical solutions in embodiments of this application with reference to the drawings in the embodiments of this application.

It is hereby noted that similar reference numerals and letters indicate similar items in the following drawings. Therefore, once an item is defined in one drawing, the item does not need to be further defined or construed in subsequent drawings. In addition, in the description of this application, the terms "first", "second", and so on are merely intended for ease of differentiation, but not intended to indicate or imply order of precedence.

Before a cell is delivered from a factory, quality inspection needs to be performed on the cell. Generally, the appearance of the cell may be inspected to detect whether there are obvious defects in the appearance of the cell. For example, through appearance detection, it is determined whether any spike abnormality, tab abnormality, or the like occurs in the cell.

Through research, the applicant hereof is aware that, for a bare cell with a spike defect, a current practice is to convey the cell to visual inspection personnel, and the visual inspection personnel visually detect whether any spike abnormality occurs in the cell. If a spike abnormality occurs, the cell is labeled abnormal. On the one hand, it is unavoidable that the judgment criteria may vary between different visual inspection personnel. The inspection by the visual inspection personnel tends to identify some spiky cells as normal cells, resulting in safety hazards of the cells; or, tends to identify some normal cells as spiky cells, resulting in a waste of resources. On the other hand, the speed of manual visual inspection is insufficient, and may lead to a delay in the production of cells and an increase in the production cost.

Another inspection method available currently is to detect cells by taking pictures with industrial cameras. This detection method needs to collect a large number of negative samples. Consequently, it takes a long period to develop and detect cells, and it is not convenient to promote the detection method for use in a large number of winding machines. In addition, a large number of pictures taken by the industrial cameras in such a detection method need to be stored, take up a large storage space, and increase the burden on hardware devices.

Based on the above research, this application provides a cell detection method to increase the speed of cell detection in a case that cell detection criteria are unified and the requirements on software and hardware are low. The cell detection method according to this application is described below with reference to some embodiments.

The cell detection methods according to different embodiments of this application are applicable to any scenario in which a cell needs to be detected. For example, the cell detection may be any step required after a winding machine completes a winding operation during production of cells. Optionally, the cell detection method may be performed after completion of a winding operation on the winding machine and before a next step of cell production.

To facilitate the understanding of each embodiment of this application, the following first describes an operating environment for performing the cell detection method disclosed herein.

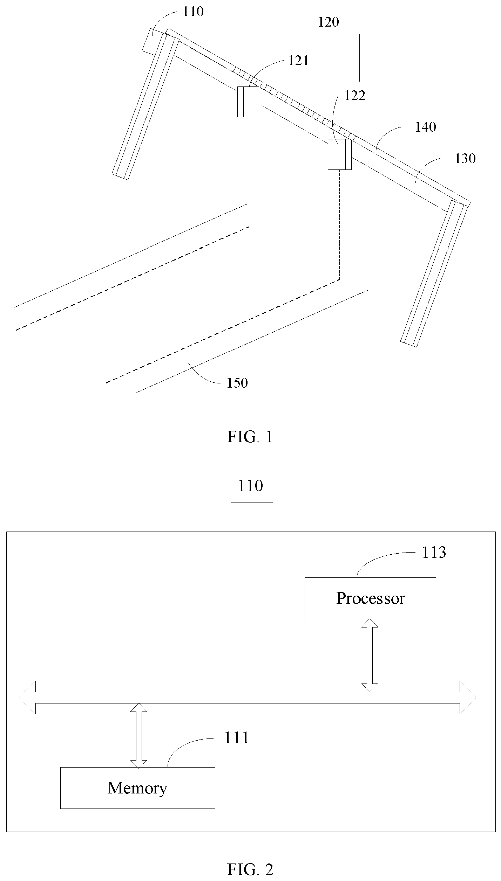

FIG. 1 is a schematic diagram of a cell detection system according to an embodiment of this application. The cell detection system includes one or more sensors 120 and a controller 110.

The sensor 120 may be configured to acquire data within a detectable range. As an example, the sensor may be a laser sensor. The laser sensor may be configured to detect a distance between the laser sensor and another object.

The controller 110 may be configured to process the data obtained by the sensor through detection, so as to determine, based on the data obtained by the sensor through detection, whether the detected target cell is abnormal.

In an optional embodiment, the cell detection system may include at least two sensors 120, including a first sensor 121 and a second sensor 122.

The first sensor 121 is configured to detect data of a first side of the target cell. The second sensor 122 is configured to detect data of a second side of the target cell. The first side is a tab-free side of the target cell, and the second side is a tab-containing side of the target cell.

As shown in FIG. 1, the cell detection system further includes a bracket 130. The first sensor 121 and the second sensor 122 are slidably mounted on the bracket 130.

The controller 110 is further configured to control the first sensor 121 or the second sensor 122 to slide on the bracket, so as to adjust the locations of the first sensor 121 and the second sensor 122 on the bracket.

As shown in FIG. 1, when a cell needs to be detected, detection signals of the first sensor 121 and the second sensor 122 can be radiated onto a carrier device 150 of the cell. The carrier device 150 may be a conveyor belt, a conveyor, or the like.

Two dashed lines on the carrier device 150 may represent a gauge line. The detection signals of the first sensor 121 and the second sensor 122 may be radiated on the gauge line. Optionally, the first sensor 121 and the second sensor 122 may be laser sensors. A laser beam of the laser sensors may be radiated on the gauge line.

Optionally, the bracket 130 may further include a graduated scale 140. Through the graduated scale 140, the locations of the first sensor 121 and the second sensor 122 can be identified. A distance between the first sensor 121 and the second sensor 122 can be identified through the graduated scale 140.

FIG. 2 is a schematic block diagram of an electronic device. The controller 110 may include a memory 111 and a processor 113. A person of ordinary skill in the art understands that the structure shown in FIG. 2 is merely for illustration, but does not constitute any limitation on the structure of the controller 110. For example, the controller 110 may include more or fewer components than the controller shown in FIG. 2, or may be configured differently from the configuration shown in FIG. 2.

The memory 111 is electrically connected to the processor 113 directly or indirectly to transmit or exchange data. For example, such components may be electrically connected to each other by one or more communication buses or signal wires. The processor 113 is configured to execute an executable module stored in the memory.

The memory 111 may be, but is not limited to, a random access memory (RAM), a read-only memory (ROM), a programmable read-only memory (PROM), an erasable programmable read-only memory (EPROM), an electric erasable programmable read-only memory (EEPROM), or the like. The memory 111 is configured to store a program. The processor 113 executes the program upon receiving an execution instruction. The method performed by the controller 110 and defined in a process disclosed in any embodiment of this application is applicable to the processor 113, or can be implemented by the processor 113.

The processor 113 may be an integrated circuit chip capable of processing signals. The processor 113 may be a general-purpose processor, such as a central processing unit (CPU for short) or a network processor (NP for short); and may be a digital signal processor (DSP for short), an application-specific integrated circuit (ASIC for short), a field programmable gate array (FPGA) or another programmable logical device, a discrete gate or a transistor logical device, or a discrete hardware component. The processor can implement or perform the cell detection method as well as steps and logic block diagrams in the cell detection method disclosed in an embodiment of this application. The general-purpose processor may be a microprocessor, or the processor may be any conventional processor or the like.

As an example, the controller 110 may be a programmable logic controller (PLC).

The controller 110 in this embodiment may be configured to execute the steps in each method according an embodiment of this application. An implementation process of the cell detection method is described in detail below with reference to several embodiments.

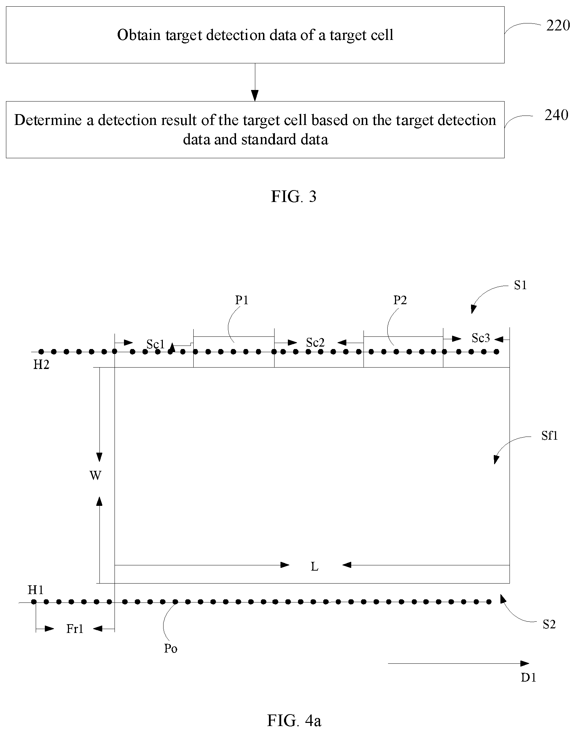

FIG. 3 is a flowchart of a cell detection method according to an embodiment of this application. The cell detection method in this embodiment may be executed by a controller. The specific process shown in FIG. 3 is described in detail below.

Step 220: Obtain target detection data of a target cell.

Optionally, the target detection data may be acquired by a sensor. The target detection data of the sensor is obtained in a process of moving the target cell into a detection range of the sensor.

Optionally, the detection data of the first side or the second side of the target cell detected by the sensor may be obtained. The first side is a tab-free side of the target cell, and the second side is a tab-containing side of the target cell.

As an example, the first sensor may be configured to detect the data of the first side of the target cell, and the second sensor may be configured to detect the data of the second side of the target cell.

The target detection data is used for representing the data of the first side and the second side of the target cell, where the data is obtained through a test performed by a detection device that tests the target detection data. The first side is a tab-free side of the target cell, and the second side is a tab-containing side of the target cell. For example, as shown in FIG. 4a, the target detection data detected by the detection device may be the data of the first side S1 and the data of the second side S2 of the target cell. Tabs P1 and P2 of the target cell are located on the first side S1 of the target cell.

As an example, if the target cell is a prismatic cell, a detection direction of the detection device may be perpendicular to a plane in which the target cell is located. As shown in FIG. 4a, the detection direction of the detection device may be perpendicular to a plane Sf1 in which the target cell is located. A point Po in the drawing may represent a detection point of the detection device on either side of the target cell. The point Po is located on the gauge lines H1 and H2 on two sides of the target cell.

The detection device may be a laser sensor. An emission direction of the laser beam of the laser sensor may represent the detection direction of the laser sensor.

In an example in which the target detection data of the target cell is detected by a laser sensor, the laser sensor can output a laser beam regularly based on timing. During the detection process, the target cell may be driven by the carrier device to move in a D1 direction. During the movement of the target cell in the D1 direction, the laser sensor may output a laser beam regularly based on timing. As shown in FIG. 4a, when the target cell is driven by the carrier device to move in the D1 direction, the laser beam of the laser sensor can fall on the gauge lines H1 and H2 shown in the drawing to form a point Po. The drawing shows the gauge line H2 on the first side S1 of the target cell and the gauge line H1 on the second side S2 of the target cell.

If no cell exists in a detection region of the laser sensor when the laser sensor emits a laser beam, the detected data can represent a distance between the laser sensor and the carrier device that conveys the cell.

When the laser sensor emits a laser beam, if a target cell exists in the detection region of the laser sensor and the laser beam of the laser sensor strikes a tab P1 or a tab P2 of the target cell, that is, if a laser beam spot Po is located at the tab P1 or tab P2, then the data detected by the laser sensor may include a distance between the laser sensor and the tab of the target cell.

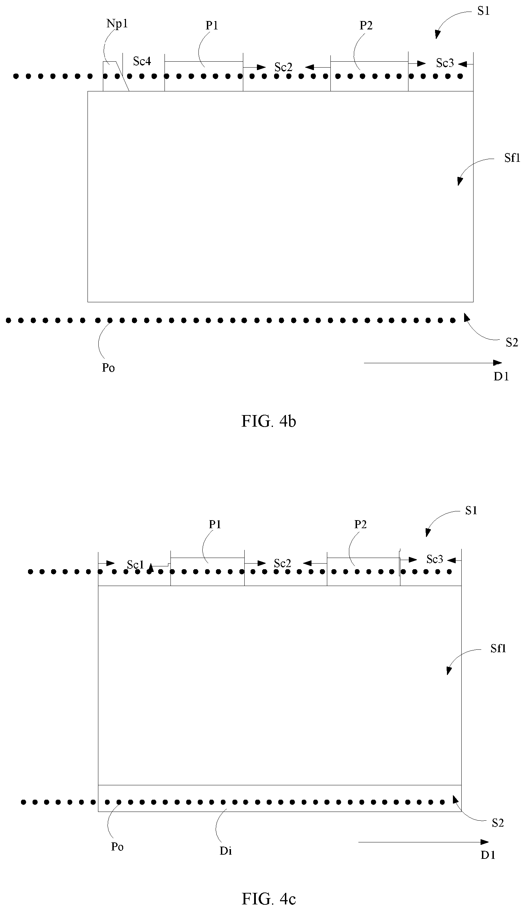

When the laser sensor emits a laser beam, if a target cell exists in the detection region of the laser sensor but the laser beam of the laser sensor strikes a position between the two tabs (for example, position Sc1, Sc2, or Sc3 shown in FIG. 4c), that is, if the laser beam spot Po is located at Sc1, Sc2, or Sc3, then the data detected by the laser sensor may include a distance between the laser sensor and the carrier device that conveys the cell.

When the laser sensor emits a laser beam, if a target cell exists in the detection region of the laser sensor and the laser beam of the laser sensor strikes a spike (such as the spike Np1 shown in FIG. 4b), that is, if the laser beam spot Po is located at the spike Np1, then the data obtained by the laser sensor through detection may include a distance between the laser sensor and the spike of the target cell.

When the laser sensor emits a laser beam, if a target cell exists in the detection region of the laser sensor and the laser beam of the laser sensor strikes an abnormal separator (such as the separator Di shown in FIG. 4c), that is, if the laser beam spot Po is located at the separator Di, then the data detected by the laser sensor may include a distance between the laser sensor and the abnormal separator of the target cell.

Step 240: Determine a detection result of the target cell based on the target detection data and standard data.

The detection result includes one or more of: the abnormality type, the abnormality time, the abnormality count, or the model of an abnormal cell. The abnormality types may include one or more of: spike abnormality, separator abnormality, or tab abnormality. The abnormality time may represent the time when the abnormality is detected. The abnormality count may be the number of times the cell is detected as abnormal within a specified detection time period.

As shown in FIG. 4a, in a process of inspecting a target cell, the target detection data of the target cell is just the data obtained at a position pertinent to the tab, and the obtained detection data is a distance between the laser sensor and the tab of the target cell. At other positions pertinent to the target cell, the obtained detection data is the distance between the laser sensor and the carrier device that conveys the cell. The other positions may be a position Sc2 between the two tabs, positions Sc1 and Sc3 from the position of the tab to an edge of the cell, or the side S2 containing no tab.

According to the claimed invention, the standard data is the detection data corresponding to a qualified cell. For example, the standard data may include the number of times a laser beam of the laser sensor strikes the tab, the number of times a laser beam between two tabs fails to strike the tab, and the like.

By comparing the target detection data of the target cell with the standard data, it can be determined whether a deviation between the target detection data of the target cell and the standard data falls within a preset error range. If the deviation between the target detection data of the target cell and the standard data falls within the preset error range, it means that the target cell is not abnormal.

For example, the detection data corresponding to the qualified cell may include the distance determined by each laser beam. The width of the tab of the qualified cell may be determined based on the distance determined by each laser beam. Subsequently, the width of the tab of the target cell is determined based on the target detection data. The width of the tab determined in the standard data is compared with the width of the tab of the target cell to determine whether the target cell is abnormal.

For another example, the detection data corresponding to the qualified cell may include the distance determined by each laser beam. A width of a void other than the tabs of the qualified cell may be determined based on the distance determined by each laser beam. Subsequently, the width of the void of the target cell is determined based on the target detection data. The width of the void other than the tabs (for example, the widths of Sc1, Sc2, and Sc3 shown in FIG. 4a) determined in the standard data is compared with the width of the void of the target cell to determine whether the target cell is abnormal. If the width of the void of the target cell is smaller than the width of the void other than the tabs determined in the standard data, the target cell may be abnormal.

As an example, the standard data may be a distance between the laser sensor and the tab of the qualified cell. As an example, the standard data may be a distance between the laser sensor and the carrier device that conveys the cell, or the like.

The technical solution hereof can improve the safety of the pre-delivery cells by detecting the target cell. Further, by virtue of automation, the detection method is more efficient than manual detection. In addition, by comparing the data with the standard data, the accuracy of cell detection results and the unification of detection criteria can be improved.

In an optional embodiment, the standard data may include a first distance. The first distance is a distance between a sensor configured to detect the target detection data and a carrier device of the target cell.

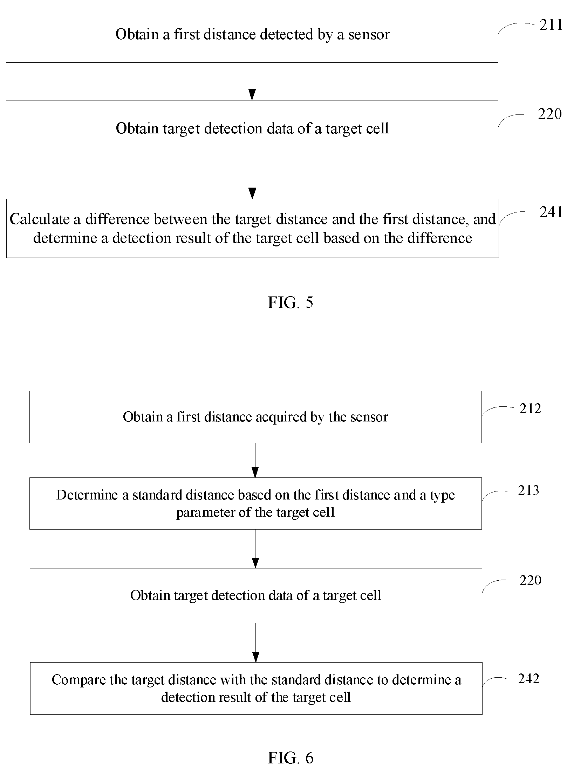

Optionally, before step 220 or step 240, as shown in FIG. 5, the cell detection method may further include: step 211: Obtain the first distance detected by the sensor.

Step 211 may be implemented in a case that no cell is contained in the detection region of the sensor.

The sensor is configured to obtain the target detection data of the target cell. The first distance represents a distance between the sensor and the carrier device of the target cell. Referring to FIG. 4a, therefore, the first distance may be the data obtained by the sensor through detection in an Fr1 section after any cell moves out of the detection range of the sensor.

The carrier device of the target cell may be a device configured to carry and convey the cell. For example, the carrier device may be a conveyor belt, a conveyor, or the like.

As an example, when no cell exists within the detection range of the sensor, the detection data of the sensor may be obtained and used as the first distance.

By comparing the target detection data of the target cell with the first distance, it can be determined whether the laser beam of the sensor directly strikes the carrier device or the laser beam of the sensor directly strikes a part of the target cell during the detection of the target cell.

Through step 210, the first distance serving as standard data is adaptively obtained. In this way, the detection of the target cell can adapt to the detection requirements of different cells, and can be more adaptable to subtle changes generated by the carrier device or sensor from time to time during use, thereby improving the accuracy of the detection result of the cell.

In this embodiment, if the first distance is used as the standard data, the target detection data of the target cell may be the target distance. In this case, as shown in FIG. 5, step 240 may include step 241: calculating a difference between the target distance and the first distance; and determining a detection result of the target cell based on the difference.

The target detection data may include a plurality of target distances. The target distance may be compared with the first distance to determine whether the sensor has detected a tab, a spike, or a separator, or the like during the detection of the target cell.

It is determined that the target cell is abnormal if, as determined based on the difference between the target distance and the first distance, the sensor discovers the spike or separator during the detection of the target cell.

The cells vary in thickness. Therefore, the judgment criteria may vary between different cells.

With the carrier device in use, the carrier device may generate jitters to different degrees in conveying the cell. Therefore, it is possible that all laser beams of the sensor strike the carrier device but the obtained distance values are different. In view of this current situation, if the difference between one or more target distances and the first distance is less than a preset value, then it is determined that the target distance is a distance from the sensor to the carrier device. If the difference between one or more target distances and the first distance is greater than the preset value, then it is determined that the target distance is a distance from the sensor to a part on the target cell.

The preset value can be set as required. For example, the preset value may be 3 m, 2 mm, or the like.

By comparing the target distance in the target detection data with the first distance in the standard data, the cell detection method can detect an abnormality in the target cell without involving much calculation, thereby improving the efficiency of cell detection.

In another optional embodiment, the standard data may include a standard distance. The standard distance is determined based on the first distance and the type parameter of the target cell. Before step 220 or step 240, as shown in FIG. 6, the cell detection method may further include:
Step 212: Obtain the first distance acquired by the sensor.

The sensor is configured to obtain the target detection data of the target cell. The first distance represents a distance between the sensor and the carrier device of the target cell.

The acquisition manner of the first distance may be the same as the obtaining manner of the first distance.

Step 213: Determine the standard distance based on the first distance and the type parameter of the target cell.

The type parameter of the target cell may include one or more of: the model of the target cell, the dimensions of the target cell, or the like.

The thickness of the target cell can be determined based on the type parameter of the target cell. The standard distance can be determined based on the first distance and the thickness of the target cell.

The standard distance may be used for representing a distance between the sensor and the tab of the cell, or the standard distance may be used for representing a distance between the sensor and a specified thickness point of the cell. The specified thickness point may be a 1/2, 1/3, or 2/3 point of the thickness of the cell. Alternatively, the specified thickness point may be another point of the thickness.

Through the above steps, the cell detection method can adapt to the detection requirements of different types of cells, and can be more adaptable to different scenarios, so as to detect different types of cells.

In this embodiment, if the standard data includes the standard distance, the target detection data includes the target distance. Still referring to FIG. 6, step 240 may include: step 242: comparing the target distance with the standard distance to determine the detection result of the target cell.

By comparing the target distance with the standard distance, it is determined whether the detected data is a distance between a part on the target cell and the sensor, or a distance between the sensor and a tab of the target cell, or a distance between the sensor and the carrier device of the target cell.

For example, if a difference between the target distance and the standard distance is less than a preset value, it indicates that the target distance is the distance between the sensor and the tab of the target cell, or the target distance is the distance between the sensor and a specified thickness point of the cell. If the target distance is the distance between the sensor and a specified thickness point of the cell, it indicates that another component exists at the specified thickness point of the target cell. The other component may be a spike, an abnormal separator, or the like.

The preset value may be set as required. For example, the preset value may be 3 mm, 2 mm, 1 mm, or the like.

According to the claimed invention, the target detection data includes a plurality of target distances. The target distance may be compared with the standard distance to determine whether the sensor has detected a tab, a spike, or a separator, or the like during the detection of the target cell.

It is determined that the target cell is abnormal if, as determined based on the target distance and the standard distance, a component other than the tabs such as a spike or a separator is discovered during the detection of the target cell.

Through the above steps, the distances can be compared to determine whether the target cell is abnormal, thereby implementing detection of the cell through a relatively small amount of calculation.

Different judgment criteria may be applied to abnormality detection on different sides of the cell. Considering that the second side S2 of a qualified cell does not contain any components, the data that the sensor can obtain through detection is the distance between the sensor and the carrier device of the cell. In view of this, with respect to a tab-free side of the target cell, step 240 may include: determining whether the target distance falls within a threshold range defined by the standard data; and
determining, when the target distance is not within the threshold range, that the detection result of the target cell is occurrence of abnormality of the target cell.

As an example, the standard data may include the first distance. Therefore, the threshold range defined by the standard data may be a range defined by the first distance. For example, the threshold range may be expressed as: ((Sd - Pv), (Sd + Pv)), where Sd represents the first distance, and Pv represents a preset value. The preset value Pv may be set as required. For example, the preset value may be a value less than a half of the thickness of the target cell. For example, if the thickness of the target cell is Th, the preset value may be equal to Th/2, Th/3, or the like.

The target detection data of the target cell includes a first detection dataset. The first detection dataset may be the detection data of a tab-free side of the target cell. When the first detection dataset includes a plurality of target distances, if each target distance falls within the threshold range defined by the standard data, the detection result of the second side of the target cell is no abnormality of the target cell. If any target distance falls outside the threshold range defined by the standard data, the detection result of the second side of the target cell is occurrence of abnormality of the target cell.

Through the above implementation, the detection result of the second side of the target cell can be rendered more intuitively, and the detection of the cell can be more comprehensive, thereby making the detection result of the cell more reliable.

In an optional implementation, the abnormality on the second side of the target cell may include: spike abnormality or separator abnormality. The criteria for identifying abnormalities may vary between different cells. Optionally, the target detection data includes a plurality of target distances and the acquisition time of each target distance. The abnormality type of the target cell may be determined based on the plurality of target distances and the acquisition time of each target distance. Based on the foregoing research, if the target cell is abnormal, step 240 may include: determining, based on the acquisition time of each target distance, a first duration of abnormality of the target cell.

As an example, the plurality of target distances may be data acquired by the sensor when the target cell is driven by the carrier device to pass through the detection range of the sensor. For example, the conveyance speed of the carrier device may be v1, and the length of the target cell may be expressed as L, and therefore, the time to be taken for acquiring the plurality of target distances is T1 = L/v1. The plurality of target distances may be expressed as: d11, d12, d13,..., d1n, respectively. The acquisition time of each target distance may be expressed as: t11, t12, t13,..., t1n, successively.

If a separator abnormality occurs in a cell, the length of the separator is the same as the length of the target cell, or a difference between the length of the separator and the length of the target cell is a tiny value.

Therefore, when the first duration is greater than a first time threshold, it is determined that the abnormality type of the target cell is a separator abnormality. The first time threshold may be a time threshold less than T1. For example, the first time threshold may be T1-te, where te represents a relatively small duration. The value of te may be selected according to an actual application scenario. This embodiment is not limited to the specific value of te.

The separator abnormality may be separator dislocation.

When the first duration is not greater than the first time threshold, it indicates that the detected abnormality of the target cell is not a separator abnormality. Therefore, it is determined that the abnormality type of the target cell is a spike.

Through the above judgment method, the abnormality type of the target cell can be determined more effectively, and the abnormalities of the cell can be classed conveniently.

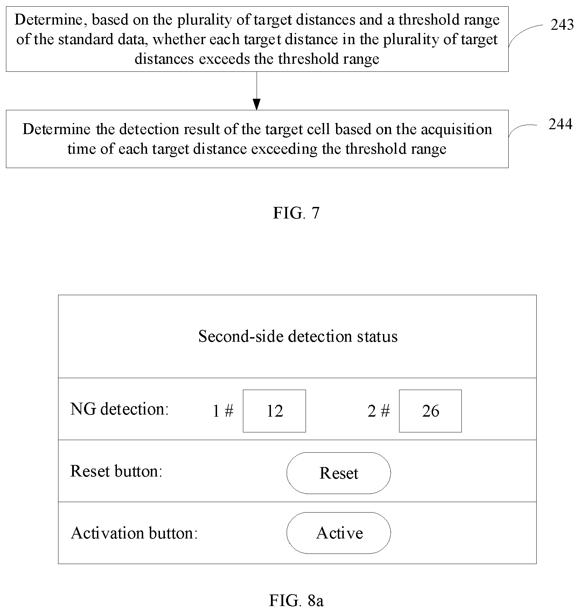

Considering that the first side S1 of a qualified cell contains two tabs, the data that the sensor can obtain through detection may be the distance between the sensor and the carrier device of the cell or the distance between the sensor and a tab of the cell. The target detection data may include a second detection dataset. The second detection dataset may include a plurality of target distances and the acquisition time of each target distance. As shown in FIG. 7, step 240 may include step 243 and step 244.

Step 243: Determine, based on the plurality of target distances and a threshold range of the standard data, whether each target distance in the plurality of target distances exceeds the threshold range.

The threshold range of the standard data may be a threshold range determined based on the first distance.

Step 244: Determine the detection result of the target cell based on the acquisition time of each target distance exceeding the threshold range.

As an example, the second detection dataset may include a plurality of target distances, expressed as: d21, d22, d23,..., d2n, respectively. The acquisition time of each target distance may be expressed as: t21, t22, t23,..., t2n, successively.

Based on t21, t22 , t23...,t2n of each acquisition time, it can be determined whether components other than the tabs exist on the first side of the target cell. A time difference between two attempts of acquiring the target distance may be expressed as Ti.

Through the above steps, the abnormality on the tab-containing side of the target cell can be detected, and the abnormality of the target cell can be detected more efficiently.

In an embodiment, step 244 may include: determining a number of interruptions of each target acquisition time based on a target acquisition time of each target distance exceeding the threshold range.

Each target distance exceeding the threshold range may represent the distance between the sensor and the tab of the target cell or another component of the target cell.

An interruption of the target acquisition time means that a time interval between two adjacent target acquisition times is greater than a time interval at which the target distance of the target cell is acquired.

In other words, an interruption of the target acquisition time means that the time interval between two adjacent target acquisition times is greater than Ti.

When the number of interruptions is greater than two, it is determined that the detection result of the target cell is occurrence of abnormality.

If the first side of the target cell is in a normal state, the first side includes two tabs only. If more than two components are detected on the first side, then the target cell is abnormally spiky.

As shown in FIG. 4b, when the sensor performs detection from the spike Np1 to the tab P2, if the target distance detected by the laser beam spot Po at the position Sc2 and the position Sc4 does not exceed the threshold range, then the target acquisition time is interrupted for twice. Therefore, it is determined that the detection result of the target cell is occurrence of abnormality, and the abnormality of the target cell is a spike.

The abnormality of the target cell can be detected just based on the target distance detected by the laser sensor at different times. The occurrence of an abnormality in the cell can be determined simply based on the number of interruptions of the target acquisition time.

In an embodiment, step 244 may include: determining, based on the acquisition time of each target distance exceeding the threshold range, a second duration each time the target distance exceeds the threshold range.

As an example, if the target distances detected by the sensor for a plurality of consecutive times exceed the threshold range, the second duration can be determined based on the target acquisition time during which the target distance is acquired for consecutive times. For example, if d25, d26, d27, d28, and d29 all exceed the threshold range, and neither d21 nor d24 exceeds the threshold range, then the second duration may be equal to a time difference between the acquisition time t25 of d25 and the acquisition time t29 of d29, that is, t29 minus t25.

As an example, the target cell may correspond to a plurality of second durations. If the target cell is a qualified cell, two second durations can be determined, and the second durations each are T2 = W1/v1, where W1 represents the width of the tab of the target cell, and v1 represents the conveyance speed of the carrier device.

If the target cell is an abnormal cell, the detection data may include a spike and one of the tabs, and two second duration are determined; or, if the spike overlaps the two tabs, one second duration can be determined. The second duration is longer than T2.

If the second duration is greater than a first time threshold, it is determined that the detection result of the target cell is a separator abnormality.

The separator abnormality may be separator dislocation.

If the second duration is not greater than the first time threshold but greater than a second time threshold, it is determined that the detection result of the target cell is a spike abnormality or a tab abnormality.

The second time threshold may be a value determined based on T2. For example, the second time threshold may be equal to T2, or the second time threshold may be a value greater than T2.

According to the above steps, not only can the abnormality of the target cell be determined, but also the abnormality type can be determined, and data support can be provided for the abnormality type of the target cell.

In an embodiment, step 244 may include: determining, based on the acquisition time of each target distance exceeding the threshold range, a third duration each time the target distance exceeds the threshold range.

If a plurality of target distances acquired consecutively by the sensor all exceed the threshold range, the third duration can be determined based on the target acquisition time when the plurality of target distances all exceed the threshold range.

If the number of times the target distance exceeds the threshold range is greater than two, it is determined that the detection result of the target cell includes a spike abnormality.

If a plurality of target distances acquired consecutively by the sensor all exceed the threshold range, it is determined that the number of times the target distance exceeds the threshold range is one.

If the number of times the target distance exceeds the threshold range is less than two and the third duration is greater than the first time threshold, it is determined that the detection result of the target cell is a separator abnormality.

If the number of times the target distance exceeds the threshold range is equal to two and the third duration any one time the target distance exceeds the threshold range is not greater than the first time threshold but greater than a second time threshold, it is determined that the detection result of the target cell is a spike abnormality or a tab abnormality.

If any one third duration is greater than the second time threshold, it may mean that the sensor has detected a component larger than the tab in width. The component may be caused by the dislocation of the tab, or may be caused by the spike that overlaps the tabs. Therefore, it is determined that the detection result of the target cell is a spike or tab abnormality.

In an embodiment, step 244 may include: determining, based on the acquisition time of each target distance exceeding the threshold range and a movement speed of the carrier device, a width of one or more components of the target cell, the components being detected by the sensor; and comparing the width of the one or more components with the width of the tab of the target cell to determine a detection result of the target cell.

The width of one or more components of the target cell detected by the sensor is determined by integrating the acquisition time of each target distance exceeding the threshold range and the movement speed of the carrier device.

Optionally, the width of the tab of the target cell may be pre-stored in a controller, or may be determined based on the type parameter of the target cell.

If two components are detected, and the width of the two components is equal to the width of the tab or a difference between the width of the components and the width of the tab is less than an error threshold, then it is determined that no abnormality occurs in the detection result of the first side of the target cell.

If two components are detected, but the width of any one of the components is greater than the width of the tab, then it is determined that an abnormality occurs in the detection result of the first side of the target cell.

If one component or more than two components are detected, it is determined that an abnormality occurs in the detection result of the first side of the target cell.

By determining the width of the detected components by performing an integration operation, the determined result is made to be more accurate.

In this embodiment, when it is determined that the target cell is abnormal, the cell detection method may further include: outputting a prompt message based on the detection result.

The prompt message may be a light prompt that produces a specified effect, or, the prompt message may be a text message or a numeral or the like displayed on a prompt interface.

Optionally, the prompt interfaces for different sides of the cell may be different. As shown in FIG. 8a, FIG. 8a shows a schematic interface of a piece of detection data of a second side of a cell. FIG. 8a shows an "NG detection" region. The "NG detection" region includes the count of abnormalities (NG) of the first cell 1# and the second cell 2#. NG may represent an abnormality that makes the detected target distance exceed the threshold range. In the example shown in FIG. 8a, the count of abnormalities (NG) of the first cell 1# is 12, and the count of abnormalities (NG) of the second cell 2# is 26.

Optionally, FIG. 8a also shows a "Reset" button for clearing the count to zero. The Reset button is used for clearing the NG data displayed on the current interface. FIG. 8a also shows the detection activation button "Active". The detection activation button is used for activating the detection.

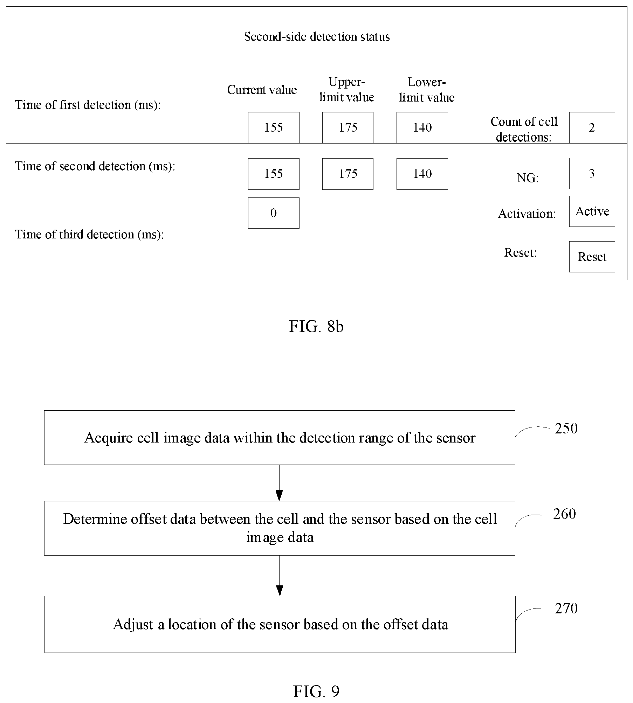

As shown in FIG. 8b, FIG. 8b shows detection data of a first side of a cell. FIG. 8b shows a schematic interface of detection data of a first side of a cell. The schematic interface shows a "Time of first detection" region, a "Time of second detection" region, a "Time of third detection" region, "Cell detection count", NG count, a detection activation button, a reset button. Definitely, depending on actual display requirements, more information may be included in the schematic interface. For example, the model of the currently detected cell, the current time, and the like may be further included in the interface.

Through the above display interface, the cell detection status can be exhibited more intuitively, and it is convenient for the user to understand the detection status of the cell in time.

Optionally, when the detection result includes a plurality of data entries, the display interface may display at least one of: the abnormality type, the abnormality time, the abnormality count, or the model of an abnormal cell.

Through the display of a variety of information, it is convenient for the user to understand the abnormality details of each cell and the abnormality distribution among different models of cells.

The accuracy of the detection result of the target cell is based on the data of the sensor that acquires the data of the cell. Therefore, when a type of detection result occurs frequently, it is necessary to determine whether the mounting location of the sensor is incorrect. For example, if the cell is located directly below the sensor, and a laser beam of the sensor strikes the cell body, then the result determined based on the detection data of the sensor is that the cell is abnormal. For another example, the cell is abnormal indeed but the abnormality fails to be detected if it is detected that the cell includes a first sensor and a second sensor, but the distance between the first sensor and the second sensor too large to radiate the laser beam of the first sensor onto the tab of the cell, or, if there is a cell located in the detection region of the sensor and the distance between the laser beam spot Po of the second sensor and the edge of the cell is relatively large.

Based on the above research, as shown in FIG. 9 , if the detection results of the target cell detected within a specified duration are all identical, the cell detection method may further include the following steps:

Step 250: Acquire cell image data within the detection range of the sensor.

Optionally, the cell image data may include a cell and a carrier device.

Step 260: Determine offset data between the cell and the sensor based on the cell image data.

Edge detection may be performed on the cell image data to determine a location of the cell in the cell image. The location may be a relative location of the cell on the carrier device.

Step 270: Adjust a location of the sensor based on the offset data.

The location of the sensor is adjusted based on the offset data to achieve the following effects: when the cell enters the detection region of the sensor, the laser beam of the sensor can strike the first side S1 and the second side S2 of the cell, and the distance between the laser beam spot Po and the edge of the cell is less than the length of the tab of the target cell.

Based on the above implementation, the location of the sensor can be adaptively adjusted, and the detection result of the target cell detected by the sensor can be more reliable.

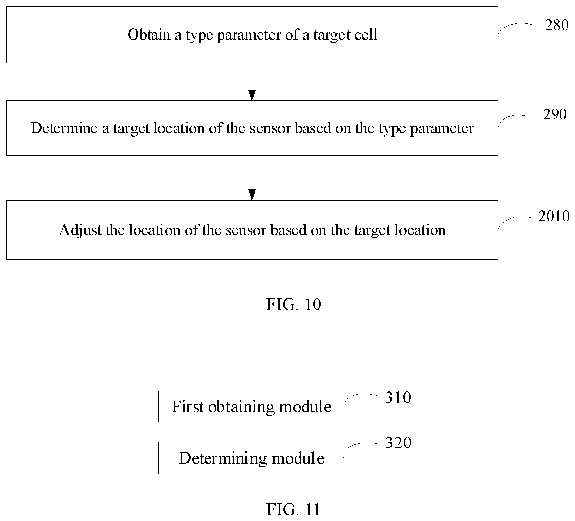

In an implementation, the location of the sensor can also be adjusted based on the model of the cell before different cells are detected. As shown in FIG. 10, the cell detection method may further include the following steps.

Step 280: Obtain a type parameter of the target cell.

The type parameter may include the model of the target cell, the dimensions of the target cell, or the like.

As an example, the dimension parameters of the target cell may include: the width W of the target cell, the length L of the target cell, the thickness of the target cell, and the like.

Step 290: Determine a target location of the sensor based on the type parameter.

The locations of the two sensors may be determined based on the width W of the target cell. The distance between the two sensors is greater than the width W of the target cell.

Step 2010: Adjust the location of the sensor based on the target location.

Optionally, the sensor may be controlled by a controller to slide on a bracket on which the sensor is mounted.

By way of the above implementation, the cell detection method can adapt to the detection requirements of different types of cells, and can be adaptable to more application scenarios of the cell detection method.

The following describe the use of the cell detection method according to an embodiment of this application by using some examples in which a conveyor is used as an example of the carrier device.

The detection for a second side S2 of a cell, also referred to as rear spike detection, is described below:

Before the cell is detected, a sensor is mounted vertically above the gauge line H1 of the cell (referring to FIG. 4a), so that a laser beam of the sensor can strike the gauge line H1. When laser beam spots output by the sensor are radiated on a conveyor, the distance on the sensor is reset to zero. Put differently, when the laser beam spots of the sensor are radiated on the conveyor, the value obtained by the sensor through detection is zero. A spiky cell occurs when the cell is brought out by the separator inside the cell. The spike is generally located at a 1/2 point of the thickness of the cell. Therefore, an alarm threshold of a displacement sensor may be set to a value less than 1/2 of the thickness of the cell. For example, the thickness of the target cell is 20 mm, and the alarm threshold may be set to 9 mm, 8 mm, 7 mm, or the like.

If a spike defect occurs on the second side, that is, a rear spike defect occurs, the value detected by the sensor will exceed the alarm threshold. Therefore, the sensor outputs a threshold alarm, and transmits the alarm signal to the controller. The controller may control the machine to raise an alarm and shut down, and may remind the relevant operators to deal with abnormalities.

Detection on a first side S1 of a cell is also referred to as front spike detection.

Before the front spike of the cell is detected, a sensor is mounted vertically above the gauge line H2 of the cell (referring to FIG. 4a), so that a laser beam of the sensor can strike the gauge line H2. When laser beam spots output by the sensor are radiated on a conveyor, the distance on the sensor is reset to zero.

A front-spiky cell occurs when the cell is brought out by the separator inside the cell. The spike is generally located at a 1/2 point of the thickness of the cell. Therefore, an alarm threshold of a displacement sensor may be set to a value less than 1/2 of the thickness of the cell. For example, the thickness of the target cell is 20 mm, and the alarm threshold may be set to 9 mm, 8 mm, 7 mm, or the like.

Along with the conveyor, the cell passes through the sensor at a speed of v1. When the tab passes the laser beam spot of the sensor, because the distance exceeds the alarm threshold of the sensor, the sensor sends a signal to the controller. By means of timing, the controller may record and store the time during which the two tabs pass the laser beam spot. For a qualified cell, the sensor detects two passage times. When a cell with a front spike defect passes the laser beam spot, the sensor detects the spike in addition to the tabs. Therefore, the detected number of times the alarm threshold is crossed exceeds two, or the time during which the alarm threshold is crossed goes beyond a time threshold. In this case, it is determined that a front spike defect occurs.

If the signal is detected for several consecutive times, the recorded number of times is only one. The duration of crossing the alarm threshold may be determined based on a difference between the time of last detection of the signal and the time of initial detection of the signal that is detected consecutively. The time threshold may be determined based on the width of the tab of the cell and the speed of the conveyor.

The detection for the tab dislocation of a cell is described below:
Before the tab dislocation of the cell is detected, a sensor is mounted vertically above the gauge line H2 of the cell, so that a laser beam of the sensor can strike the gauge line H2. When laser beam spots output by the sensor are radiated on a conveyor, the distance on the sensor is reset to zero.

The tab P1 of the cell includes a plurality of tab plates, and the tab P2 of the cell also includes a plurality of tab plates. Using the tab P1 as an example, the first tab plate to the last tab plate of the tab P1 are distributed between the conveyor of the cell and a 1/2 point of the thickness of the cell. Ideally, when the alarm threshold of the sensor is set to zero, all tab plates can be detected. Considering that the conveyor may fluctuate during movement, if the alarm threshold is set to zero, the fluctuation of the conveyor may trigger alarm signals. Therefore, it is necessary to eliminate the interference caused by the conveyor fluctuation to the sensor. In view of this, the alarm threshold for tab dislocation detection may be set to a value greater than zero and less than 1/2 of the thickness of the cell. For example, the alarm threshold may be set to 4 mm, 3 mm, 2 mm, 1 mm, or the like. Specifically, the alarm threshold may be set depending on the fluctuation status of the conveyor.

The cell passes the sensor along with the conveyor at a speed v1. Therefore, the time taken for the sensor to detect the alarm signal is multiplied by the speed to obtain a product representing the width of the tab. Considering that the tab dislocation generally makes the tab wider than a qualified tab, the tab dislocation of the cell can be detected by checking whether the time taken to detect the alarm signal exceeds an upper-limit time threshold.

For example, the durations taken to detect the tab on two consecutive occasions are expressed as Tp1 and Tp2 respectively. If Tp1 is greater than Tmax or Tp2 is greater than Tmax, the detection result of the cell is that the tab is dislocated, where Tmax represents the upper-limit time threshold.

The detection for separator dislocation is described below:
The mounting position of the sensor required for detecting separator dislocation is the same as the mounting position of the sensor for detecting the front spike and the rear spike.

Due to the dislocation of the separator of the cell, the cell becomes wider in the width direction. Therefore, the laser beam of the sensor directly strikes a long edge of the cell. Based on this situation, the sensor can continuously transmit alarm signals to the controller. Therefore, the controller just detects a period of continuous alarms, and the duration of the continuous alarms is the length L of the cell divided by v1. If the duration is far longer than a preset upper-limit time threshold, it is determined that the separator is dislocated, expressed as: L/v1 >> Tmax.

The method according to this embodiment of this application can detect and screen out a variety of defective cells by detecting the distance through a sensor. In addition, the method involves a relatively small amount of calculation, and can discover problems in the cells in time, so that the problems can be solved in time and the defective cells can be screened out in time.

Based on the same concept, an embodiment of this application further provides a cell detection device corresponding to the cell detection method. The principles of solving the problems by the device according to this embodiment of this application are similar to those described in the embodiment of the cell detection method above, the implementation of the device in this embodiment may be learned by reference to the description in the foregoing method embodiment, details of which are omitted here.

FIG. 11 is a schematic diagram of functional modules of a cell detection device according to an embodiment of this application. Each module in the cell detection device in this embodiment is configured to execute corresponding steps in the above method embodiment. The cell detection device includes: a first obtaining module 310 and a determining module 320. The modules are described below:
The first obtaining module 310 is configured to obtain target detection data of a target cell.

The determining module 320 is configured to determine a detection result of the target cell based on the target detection data and standard data.

In a possible embodiment, the standard data includes a first distance. The first distance is a distance between a sensor configured to detect the target detection data and a carrier device of the target cell.

In a possible embodiment, the standard data includes a first distance, and the cell detection device may further include: a second obtaining module, configured to obtain the first distance detected by the sensor, where the sensor is configured to detect the target detection data of the target cell, and the first distance represents a distance between the sensor and a carrier device of the target cell.

In a possible embodiment, the target detection data includes a target distance, and the determining module 320 is configured to: calculate a difference between the target distance and the first distance, and determine a detection result of the target cell based on the difference.

In a possible embodiment, the standard data includes a standard distance. The standard distance is determined based on a first distance and a type parameter of the target cell. The first distance is a distance between a sensor configured to detect the target detection data and a carrier device of the target cell.

In a possible embodiment, the standard data includes a standard distance, and the cell detection device may further include a third obtaining module. The third obtaining module is configured to: obtain the first distance acquired by the sensor, where the sensor is configured to detect the target detection data of the target cell, and the first distance represents a distance between the sensor and a carrier device of the target cell; and determine the standard distance based on the first distance and a type parameter of the target cell.

According to the claimed invention, the target detection data includes a target distance, and the determining module 320 is configured to compare the target distance with the standard distance to determine a detection result of the target cell.

According to the claimed invention, the target detection data includes a target distance, and the determining module 320 is configured to: determine whether the target distance falls within a threshold range defined by the standard data; and determine, when the target distance is not within the threshold range, that the detection result of the target cell is occurrence of abnormality of the target cell.

According to the claimed invention, the target detection data includes a plurality of target distances and an acquisition time of each target distance. The determining module 320 is configured to: determine a first duration of abnormality of the target cell based on the acquisition time of each target distance when the target cell is abnormal; determine, when the first duration is greater than a first time threshold, that an abnormality type of the target cell is a separator abnormality; or, determine, when the first duration is not greater than a first time threshold, that an abnormality type of the target cell is a spike abnormality.

In a possible embodiment, the target detection data includes a plurality of target distances and an acquisition time of each target distance. The determining module 320 is configured to: determine, based on the plurality of target distances and a threshold range of the standard data, whether each target distance in the plurality of target distances exceeds the threshold range; and determine the detection result of the target cell based on the acquisition time of each target distance exceeding the threshold range.

In a possible embodiment, the determining module 320 is further configured to: determine a number of interruptions of each target acquisition time based on a target acquisition time of each target distance exceeding the threshold range, where an interruption of the target acquisition time means that a time interval between two adjacent target acquisition times is greater than a time interval at which the target distance of the target cell is acquired; and determine, when the number of interruptions is greater than two, that the detection result of the target cell is occurrence of abnormality.

In a possible embodiment, the determining module 320 is further configured to: determine, based on the acquisition time of each target distance exceeding the threshold range, a second duration each time the target distance exceeds the threshold range; determine, when the second duration is greater than a first time threshold, that the detection result of the target cell is a separator abnormality; or, determine, when the second duration is not greater than a first time threshold but greater than a second time threshold, that the detection result of the target cell is a spike abnormality or a tab abnormality.

In a possible embodiment, the determining module 320 is further configured to: determine, based on the acquisition time of each target distance exceeding the threshold range, a third duration each time the target distance exceeds the threshold range; determine, when a number of times the target distance exceeds the threshold range is greater than two, that the detection result of the target cell includes a spike abnormality; determine, when the number of times the target distance exceeds the threshold range is less than two and the third duration is greater than the first time threshold, that the detection result of the target cell is a separator abnormality; and determine, when the number of times the target distance exceeds the threshold range is equal to two and the third duration any one time the target distance exceeds the threshold range is not greater than the first time threshold but greater than a second time threshold, that the detection result of the target cell is the spike abnormality or a tab abnormality.

In a possible embodiment, the cell detection device may further include: an output module, configured to output a prompt message based on the detection result.

In a possible embodiment, the detection result includes one or more of an abnormality type, abnormality time, an abnormality count, or a model of an abnormal cell. The output module is configured to display, through a display interface, at least one of the abnormality type, the abnormality time, the abnormality count, or the model of an abnormal cell.

In a possible embodiment, the cell detection device may further include: a first adjustment module, configured to: acquire cell image data in a detection range of a sensor when all detection results of target cells detected within a specified duration are identical, where the sensor is configured to acquire the target detection data of the target cells; determine offset data between the cell and the sensor based on the cell image data; and adjust a location of the sensor based on the offset data.

In a possible embodiment, the cell detection device may further include: a second adjustment module, configured to: obtain a type parameter of the target cell; determine a target location of the sensor based on the type parameter; and adjust a location of the sensor based on the target location.

In a possible embodiment, the first obtaining module 310 is configured to obtain target detection data of the sensor in a process of moving the target cell into a detection range of the sensor.

In a possible embodiment, the first obtaining module 310 is configured to obtain detection data of a first side or a second side of the target cell detected by the sensor, where the first side is a tab-free side of the target cell, and the second side is a tab-containing side of the target cell.

In addition, an embodiment of this application further provides a computer-readable storage medium. The computer-readable storage medium stores a computer program. When executed by the processor, the computer program performs steps of the cell detection method described in the foregoing method embodiment.

The computer program product of the cell detection method according to an embodiment of this application includes a computer-readable storage medium that stores program code. Instructions included in the program code may be used to execute steps of the cell detection method in the above method embodiment. For details, reference may be made to the above method embodiment, and the details are not repeated here.

In the several embodiments provided in this application, it is to be understood that the disclosed apparatus and method may be implemented in other manners instead. The device embodiments described above are merely illustrative. For example, the flowcharts and block diagrams in the accompanying drawings show the system architecture, functions, and operations that may be implemented by the device, method, and computer program product according to some embodiments of this application. In this regard, each block in a flowchart or block diagram may represent a module, program segment, or part of code. The module, program segment, or part of code includes one or more executable instructions that are used for implementing specified logic functions. It is also worth noting that, in some alternative implementations, the functions noted in the block may occur in order different from the order specified in the drawings. For example, two consecutive blocks may practically be executed almost in parallel, or may sometimes be executed in reverse order, depending upon the functionality involved. It is also worth noting that each block in the block diagrams and/or flowcharts, and a combination of the blocks in the block diagrams and/or flowcharts, may be implemented by a dedicated hardware-based system that performs the specified functions or actions, or may be implemented by a combination of dedicated hardware and computer instructions.

In addition, function modules in each embodiment of this application may be integrated together to form a stand-alone part, or each module may exist alone, or two or more modules may be integrated into a stand-alone part.

When the functions are implemented in the form of a software functional module and sold or used as an independent product, the functions may be stored in a computer-readable storage medium. Based on such an understanding, the essence of the technical solution of this application, or the part making contributions to the prior art, or a part of the technical solution may be embodied in the form of a software product. The computer software product is stored in a storage medium, and includes several instructions for instructing a computer device (such as a personal computer, a server, a network device) to perform all or part of the steps of the method described in each embodiment of this application. The storage medium includes any medium that can store program code, such as a USB flash disk, a removable hard disk, a read-only memory (ROM), a random access memory (RAM), a magnetic disk, or an optical disk. It is hereby noted that the relational terms herein such as first and second are used only to differentiate an entity or operation from another entity or operation, and do not require or imply any actual relationship or sequence between the entities or operations. Moreover, the terms "include", "comprise", and any variation thereof are intended to cover a non-exclusive inclusion relationship in which a process, method, object, or device that includes or comprises a series of elements not only includes such elements, but also includes other elements not expressly specified or also includes inherent elements of the process, method, object, or device. Unless otherwise specified in the context, reference to a process, method, object, or device that "includes" or "comprises" a specific number of elements shall not exclude other equivalent elements existent in the process, method, object, or device.

What is described above is merely exemplary embodiments of this application, but is not intended to limit this application. The scope of the protection is defined by the appended claims. It is hereby noted that similar reference numerals and letters indicate similar items in the following drawings. Therefore, once an item is defined in one drawing, the item does not need to be further defined or construed in subsequent drawings.

## Claims

1. A battery cell detection method, wherein the method comprises:
obtaining (220) target detection data of a conveyed target cell;
determining (240) a detection result of the target cell based on the target detection data and standard data, wherein the standard data is detection data corresponding to a qualified cell, and, by comparing (242) the target detection data of the target cell with the standard data, it can be determined whether a deviation between the target detection data of the target cell and the standard data falls within a preset error range;
wherein the target detection data comprises a target distance, and the determining a detection result of the target cell based on the target detection data and standard data comprises:
determining whether the target distance falls within a threshold range defined by the standard data; and
determining, when the target distance is not within the threshold range, that the detection result of the target cell is occurrence of abnormality of the target cell; **characterized in that**, the target detection data comprises a plurality of target distances and an acquisition time of each target distance, and the determining a detection result of the target cell based on the target detection data and standard data further comprises:
determining a first duration of abnormality of the target cell based on the acquisition time of each target distance when the target cell is abnormal;
determining, when the first duration is greater than a first time threshold, that an abnormality type of the target cell is a separator abnormality; or
determining, when the first duration is not greater than a first time threshold, that an abnormality type of the target cell is a spike abnormality.

2. The method according to claim 1, **characterized in that** the determining a detection result of the target cell based on the target detection data and standard data comprises:
determining (243), based on the plurality of target distances and a threshold range of the standard data, whether each target distance in the plurality of target distances exceeds the threshold range; and
determining (244) the detection result of the target cell based on the acquisition time of each target distance exceeding the threshold range.

3. The method according to claim 2, **characterized in that** the determining the detection result of the target cell based on the acquisition time of each target distance exceeding the threshold range comprises:
determining a number of interruptions of each target acquisition time based on a target acquisition time of each target distance exceeding the threshold range, wherein an interruption of the target acquisition time means that a time interval between two adjacent target acquisition times is greater than a time interval at which the target distance of the target cell is acquired; and
determining, when the number of interruptions is greater than two, that the detection result of the target cell is occurrence of abnormality.

4. The method according to claim 2, **characterized in that** the determining the detection result of the target cell based on the acquisition time of each target distance exceeding the threshold range comprises:
determining, based on the acquisition time of each target distance exceeding the threshold range, a second duration each time the target distance exceeds the threshold range;
determining, when the second duration is greater than a first time threshold, that the detection result of the target cell is a separator abnormality; or
determining, when the second duration is not greater than a first time threshold but greater than a second time threshold, that the detection result of the target cell is a spike abnormality or a tab abnormality.

5. The method according to claim 2, **characterized in that** the determining the detection result of the target cell based on the acquisition time of each target distance exceeding the threshold range comprises:
determining, based on the acquisition time of each target distance exceeding the threshold range, a third duration each time the target distance exceeds the threshold range;
determining, when a number of times the target distance exceeds the threshold range is greater than two, that the detection result of the target cell comprises a spike abnormality;
determining, when the number of times the target distance exceeds the threshold range is less than two and the third duration is greater than the first time threshold, that the detection result of the target cell is a separator abnormality; and
determining, when the number of times the target distance exceeds the threshold range is equal to two and the third duration any one time the target distance exceeds the threshold range is not greater than the first time threshold but greater than a second time threshold, that the detection result of the target cell is the spike abnormality or a tab abnormality.

6. The method according to any one of claims 1 to 5, **characterized in that** the method further comprises:
outputting a prompt message based on the detection result;
preferably,
**characterized in that** the detection result comprises one or more of an abnormality type, an abnormality time, an abnormality count, or a model of an abnormal cell; and the outputting a prompt message based on the detection result comprises:
displaying, through a display interface, at least one of the abnormality type, the abnormality time, the abnormality count, or the model of an abnormal cell.

7. The method according to any one of claims 1 to 5, **characterized in that** the method further comprises:
acquiring (250) cell image data in a detection range of a sensor (120) when all detection results of target cells detected within a specified duration are identical, wherein the sensor (120) is configured to acquire the target detection data of the target cells;
determining (260) offset data between the cell and the sensor (120) based on the cell image data; and
adjusting (270) a location of the sensor (120) based on the offset data.

8. The method according to any one of claims 1 to 5, **characterized in that** the method further comprises:
obtaining (280) a type parameter of the target cell;
determining (290) a target location of the sensor (120) based on the type parameter; and
adjusting (2010) a location of the sensor (120) based on the target location.

9. The method according to any one of claims 1 to 5, **characterized in that** the obtaining target detection data of a target cell comprises:
obtaining the target detection data of a sensor (120) in a process of moving the target cell into a detection range of the sensor (120).

10. The method according to any one of claims 1 to 5, **characterized in that** the obtaining target detection data of a target cell comprises:
obtaining detection data of a first side or a second side of the target cell detected by the sensor (120), wherein the first side is a tab-free side of the target cell, and the second side is a tab-containing side of the target cell.

11. A controller (110), **characterized in that** the controller (110) comprises a processor (113) and a memory (111); the memory (111) stores a machine-readable instruction executable by the processor (113); and, when executed by the processor (113) during operation of an electronic device, the machine-readable instruction performs steps of the method according to any one of claims 1 to 10.

12. A cell detection system, **characterized in that** the cell detection system comprises:
a sensor (120), configured to obtain target detection data of a target cell; and
the controller (110) according to claim 11, wherein the controller (110) is connected to the sensor (120) and is configured to obtain the detection data of the sensor (120) and determine, based on the detection data, whether the target cell is abnormal.

13. The cell detection system according to claim 12, **characterized in that** the sensor (120) comprises a first sensor (121) and a second sensor (122), wherein
the first sensor (121) is configured to detect data of a first side (S1) of the target cell; and
the second sensor (122) is configured to detect data of a second side (S2) of the target cell, wherein
the first side (S1) is a tab-free side of the target cell, and the second side (S2) is a tab-containing side of the target cell.

14. The cell detection system according to claim 12, **characterized in that** the cell detection system further comprises a bracket (130);
the first sensor (121) and the second sensor (122) are slidably mounted on the bracket (130); and
the controller is further configured to control the first sensor (121) or the second sensor (122) to slide on the bracket (130).

15. The cell detection system according to claim 14, **characterized in that** a graduated scale (140) is further provided on the bracket (130).

## Patentansprüche

1. Batteriezellendetektionsverfahren, wobei das Verfahren umfasst:
Erhalten (220) von Zieldetektionsdaten einer beförderten Zielzelle;
Bestimmen (240) eines Detektionsergebnisses der Zielzelle basierend auf den Zieldetektionsdaten und Standarddaten, wobei es sich bei den Standarddaten um Detektionsdaten handelt, die einer qualifizierten Zelle entsprechen, und durch Vergleichen (242) der Zieldetektionsdaten der Zielzelle mit den Standarddaten kann bestimmt werden, ob eine Abweichung zwischen den Zieldetektionsdaten der Zielzelle und den Standarddaten innerhalb eines voreingestellten Fehlerbereichs fällt;
wobei die Zieldetektionsdaten einen Zielabstand umfassen, und das Bestimmen eines Detektionsergebnisses der Zielzelle basierend auf den Zieldetektionsdaten und den Standarddaten umfasst:
Bestimmen, ob der Zielabstand innerhalb eines Schwellenbereichs fällt, der durch die Standarddaten definiert wird; und
Bestimmen, wenn der Zielabstand nicht innerhalb des Schwellenbereichs fällt, dass das Detektionsergebnis der Zielzelle das Auftreten einer Anomalie der Zielzelle ist;
**dadurch gekennzeichnet, dass**
die Zieldetektionsdaten eine Vielzahl von Zielabständen und eine Erfassungszeit jedes Zielabstands umfassen, und das Bestimmen eines Detektionsergebnisses der Zielzelle basierend auf den Zieldetektionsdaten und Standarddaten ferner umfasst:
Bestimmen einer ersten Anomaliedauer der Zielzelle basierend auf der Erfassungszeit jedes Zielabstands, wenn die Zielzelle anormal ist;
Bestimmen, wenn die erste Dauer größer als eine erste Zeitschwelle ist, dass eine Anomalieart der Zielzelle eine Separatoranomalie ist; oder
Bestimmen, wenn die erste Dauer nicht größer als eine erste Zeitschwelle ist, dass eine Anomalieart der Zielzelle eine Zackenanomalie ist.

2. Verfahren nach Anspruch 1, **dadurch gekennzeichnet, dass** das Bestimmen eines Detektionsergebnisses der Zielzelle basierend auf den Zieldetektionsdaten und Standarddaten umfasst:
Bestimmen (243), basierend auf der Vielzahl von Zielabständen und einem Schwellenbereich der Standarddaten, ob jeder Zielabstand in der Vielzahl von Zielabständen den Schwellenbereich überschreitet; und
Bestimmen (244) des Detektionsergebnisses der Zielzelle basierend darauf, dass die Erfassungszeit jedes Zielabstands den Schwellenbereich überschreitet.

3. Verfahren nach Anspruch 2, **dadurch gekennzeichnet, dass** das Bestimmen des Detektionsergebnisses der Zielzelle basierend darauf, dass die Erfassungszeit jedes Zielabstands den Schwellenbereich überschreitet, umfasst:
Bestimmen einer Anzahl von Unterbrechungen jeder Zielerfassungszeit basierend darauf, dass eine Zielerfassungszeit jedes Zielabstands den Schwellenbereich überschreitet, wobei eine Unterbrechung der Zielerfassungszeit bedeutet, dass ein Zeitintervall zwischen zwei benachbarten Zielerfassungszeiten größer als ein Zeitintervall ist, zu dem der Zielabstand der Zielzelle erfasst wird; und
Bestimmen, wenn die Anzahl von Unterbrechungen größer als zwei ist, dass das Detektionsergebnis der Zielzelle das Auftreten einer Anomalie ist.

4. Verfahren nach Anspruch 2, **dadurch gekennzeichnet, dass** das Bestimmen des Detektionsergebnisses der Zielzelle basierend darauf, dass die Erfassungszeit jedes Zielabstands den Schwellenbereich überschreitet, umfasst:
Bestimmen, basierend darauf, dass die Erfassungszeit jedes Zielabstands den Schwellenbereich überschreitet, einer zweiten Dauer jedes Mal, wenn der Zielabstand den Schwellenbereich überschreitet;
Bestimmen, wenn die zweite Dauer größer als eine erste Zeitschwelle ist, dass das Detektionsergebnis der Zielzelle eine Separatoranomalie ist; oder
Bestimmen, wenn die zweite Dauer nicht größer als eine erste Zeitschwelle, aber größer als eine zweite Zeitschwelle ist, dass das Detektionsergebnis der Zielzelle eine Zackenanomalie oder eine Laschenanomalie ist.

5. Verfahren nach Anspruch 2, **dadurch gekennzeichnet, dass** das Bestimmen des Detektionsergebnisses der Zielzelle basierend darauf, dass die Erfassungszeit jedes Zielabstands den Schwellenbereich überschreitet, umfasst:
Bestimmen, basierend darauf, dass die Erfassungszeit jedes Zielabstands den Schwellenbereich überschreitet, einer dritten Dauer jedes Mal, wenn der Zielabstand den Schwellenbereich überschreitet;
Bestimmen, wenn eine Anzahl von Malen, für die der Zielabstand den Schwellenbereich überschreitet, größer als zwei ist, dass das Detektionsergebnis der Zielzelle eine Zackenanomalie umfasst;
Bestimmen, wenn die Anzahl von Malen, für die der Zielabstand den Schwellenbereich überschreitet, kleiner als zwei ist, und die dritte Dauer größer als die erste Zeitschwelle ist, dass das Detektionsergebnis der Zielzelle eine Separatoranomalie ist; und
Bestimmen, wenn die Anzahl von Malen, für die der Zielabstand den Schwellenbereich überschreitet, gleich zwei ist, und die dritte Dauer, zu einer jeglichen Zeit, zu der der Zielabstand den Schwellenbereich überschreitet, nicht größer als die erste Zeitschwelle, aber größer als eine zweite Zeitschwelle ist, dass das Detektionsergebnis der Zielzelle die Zackenanomalie oder eine Laschenanomalie ist.

6. Verfahren nach einem der Ansprüche 1 bis 5, **dadurch gekennzeichnet, dass** das Verfahren ferner umfasst:
Ausgeben einer Aufforderungsnachricht basierend auf dem Detektionsergebnis;
vorzugsweise
**dadurch gekennzeichnet, dass** das Detektionsergebnis eines oder mehrere von einer Anomalieart, einer Anomaliezeit, einer Anomaliezählung oder einem Modell einer anormalen Zelle umfasst;
und das Ausgeben einer Aufforderungsnachricht basierend auf dem Detektionsergebnis umfasst:
Anzeigen, über eine Anzeigeschnittstelle, mindestens eines der Anomalieart, der Anomaliezeit, der Anomaliezählung oder des Modells einer anormalen Zelle.

7. Verfahren nach einem der Ansprüche 1 bis 5, **dadurch gekennzeichnet, dass** das Verfahren ferner umfasst:
Erfassen (250) von Zellenbilddaten in einem Detektionsbereich eines Sensors (120), wenn alle Detektionsergebnisse von Zielzellen, die innerhalb einer spezifizierten Dauer detektiert werden, identisch sind, wobei der Sensor (120) dazu ausgelegt ist, die Zieldetektionsdaten der Zielzellen zu erfassen;
Bestimmen (260) von Versatzdaten zwischen der Zelle und dem Sensor (120) basierend auf den Zellenbilddaten; und
Anpassen (270) eines Orts des Sensors (120) basierend auf den Versatzdaten.

8. Verfahren nach einem der Ansprüche 1 bis 5, **dadurch gekennzeichnet, dass** das Verfahren ferner umfasst:
Erhalten (280) eines Artenparameters der Zielzelle;
Bestimmen (290) eines Zielorts des Sensors (120) basierend auf dem Artenparameter; und
Anpassen (2010) eines Orts des Sensors (120) basierend auf dem Zielort.

9. Verfahren nach einem der Ansprüche 1 bis 5, **dadurch gekennzeichnet, dass** das Erhalten von Zieldetektionsdaten einer Zielzelle umfasst:
Erhalten der Zieldetektionsdaten eines Sensors (120) in einem Prozess des Bewegens der Zielzelle in einen Detektionsbereich des Sensors (120).

10. Verfahren nach einem der Ansprüche 1 bis 5, **dadurch gekennzeichnet, dass** das Erhalten von Zieldetektionsdaten einer Zielzelle umfasst:
Erhalten von Detektionsdaten einer ersten Seite oder einer zweiten Seite der Zielzelle, die durch den Sensor (120) detektiert wird, wobei die erste Seite eine laschenfreie Seite der Zielzelle ist und die zweite Seite eine laschenenthaltende Seite der Zielzelle ist.

11. Steuerung (110), **dadurch gekennzeichnet, dass** die Steuerung (110) einen Prozessor (113) und einen Speicher (111) umfasst; wobei der Speicher (111) eine maschinenlesbare Anweisung speichert, die durch den Prozessor (113) ausführbar ist; und, wenn durch den Prozessor (113) während des Betriebs einer elektronischen Vorrichtung ausgeführt, die maschinenlesbare Anweisung Schritte des Verfahrens nach einem der Ansprüche 1 bis 10 durchführt.

12. Zellendetektionssystem, **dadurch gekennzeichnet, dass** das Zellendetektionssystem umfasst:
einen Sensor (120), der dazu ausgelegt ist, Zieldetektionsdaten einer Zielzelle zu erhalten; und
die Steuerung (110) nach Anspruch 11, wobei die Steuerung (110) mit dem Sensor (120) verbunden ist und dazu ausgelegt ist, die Detektionsdaten des Sensors (120) zu erhalten und basierend auf den Detektionsdaten zu bestimmen, ob die Zielzelle anormal ist.

13. Zellendetektionssystem nach Anspruch 12, **dadurch gekennzeichnet, dass** der Sensor (120) einen ersten Sensor (121) und einen zweiten Sensor (122) umfasst, wobei
der erste Sensor (121) dazu ausgelegt ist, Daten einer ersten Seite (S1) der Zielzelle zu detektieren; und
der zweite Sensor (122) dazu ausgelegt ist, Daten einer zweiten Seite (S2) der Zielzelle zu detektieren, wobei
die erste Seite (S1) eine laschenfreie Seite der Zielzelle ist und die zweite Seite (S2) eine laschenenthaltende Seite der Zielzelle ist.

14. Zellendetektionssystem nach Anspruch 12, **dadurch gekennzeichnet, dass** das Zellendetektionssystem ferner eine Halterung (130) umfasst;
wobei der erste Sensor (121) und der zweite Sensor (122) verschiebbar an der Halterung (130) befestigt sind; und
die Steuerung ferner dazu ausgelegt ist, den ersten Sensor (121) oder den zweiten Sensor (122) für die Verschiebung an der Halterung (130) zu steuern.

15. Zellendetektionssystem nach Anspruch 14, **dadurch gekennzeichnet, dass** ferner eine abgestufte Skala (140) an der Halterung (130) bereitgestellt ist.

## Revendications

1. Procédé de détection de cellule de batterie, le procédé comprenant:
l'obtention (220) de données de détection de cible d'une cellule cible transportée;
la détermination (240) d'un résultat de détection de la cellule cible sur la base des données de détection de cible et de données de référence, les données de référence étant des données de détection correspondant à une cellule qualifiée, et, par comparaison (242) des données de détection de cible de la cellule cible avec les données de référence, la détermination si un écart entre les données de détection de cible de la cellule cible et les données de référence est compris dans une plage d'erreur prédéfinie;
les données de détection de cible comprenant une distance de cible, et la détermination d'un résultat de détection de la cellule cible sur la base des données de détection de cible et de données de référence comprenant:
la détermination si la distance de cible est comprise dans une plage de seuil définie par les données de référence; et
la détermination, lorsque la distance de cible n'est pas comprise dans la plage de seuil, que le résultat de détection de la cellule cible indique une présence d'anomalie de la cellule cible;
**caractérisé en ce que**
les données de détection de cible comprennent une pluralité de distances de cible et un instant d'acquisition de chaque distance de cible, et **en ce que** la détermination d'un résultat de détection de la cellule cible sur la base des données de détection de cible et de données de référence comprend en outre:
la détermination d'une première durée d'anomalie de la cellule cible sur la base de l'instant d'acquisition de chaque distance de cible lorsque la cellule cible est anormale;
la détermination, lorsque la première durée est supérieure à un premier seuil temporel, qu'un type d'anomalie de la cellule cible est une anomalie de type séparateur; ou
la détermination, lorsque la première durée n'est pas supérieure à un premier seuil temporel, qu'un type d'anomalie de la cellule cible est une anomalie de type saillie.

2. Procédé selon la revendication 1, **caractérisé en ce que** la détermination d'un résultat de détection de la cellule cible sur la base des données de détection de cible et de données de référence comprend:
la détermination (243), sur la base de la pluralité de distances de cible et d'une plage de seuil des données de référence, si chaque distance de cible parmi la pluralité de distances de cible est en dehors de la plage de seuil; et
la détermination (244) du résultat de détection de la cellule cible sur la base de l'instant d'acquisition de chaque distance de cible en dehors de la plage de seuil.

3. Procédé selon la revendication 2, **caractérisé en ce que** la détermination du résultat de détection de la cellule cible sur la base de l'instant d'acquisition de chaque distance de cible en dehors de la plage de seuil comprend:
la détermination d'un nombre d'interruptions de chaque instant d'acquisition de cible sur la base d'un instant d'acquisition de cible de chaque distance de cible en dehors de la plage de seuil, une interruption de l'instant d'acquisition de cible étant définie comme un intervalle de temps entre deux instants d'acquisition de cible adjacents supérieur à un intervalle de temps auquel la distance de cible de la cellule cible est acquise; et
la détermination, lorsque le nombre d'interruptions est supérieur à deux, que le résultat de détection de la cellule cible indique une présence d'anomalie.

4. Procédé selon la revendication 2, **caractérisé en ce que** la détermination du résultat de détection de la cellule cible sur la base de l'instant d'acquisition de chaque distance de cible en dehors de la plage de seuil comprend:
la détermination, sur la base de l'instant d'acquisition de chaque distance de cible en dehors de la plage de seuil, d'une deuxième durée chaque fois que la distance de cible est en dehors de la plage de seuil;
la détermination, lorsque la deuxième durée est supérieure à un premier seuil temporel, que le résultat de détection de la cellule cible indique une anomalie de type séparateur; ou
la détermination, lorsque la deuxième durée n'est pas supérieure à un premier seuil temporel mais est supérieure à un deuxième seuil temporel, que le résultat de détection de la cellule cible indique une anomalie de type saillie ou une anomalie de type languette.

5. Procédé selon la revendication 2, **caractérisé en ce que** la détermination du résultat de détection de la cellule cible sur la base de l'instant d'acquisition de chaque distance de cible en dehors de la plage de seuil comprend:
la détermination, sur la base de l'instant d'acquisition de chaque distance de cible en dehors de la plage de seuil, d'une troisième durée chaque fois que la distance de cible est en dehors de la plage de seuil;
la détermination, lorsqu'un nombre de fois où la distance de cible est en dehors de la plage de seuil est supérieur à deux, que le résultat de détection de la cellule cible comprend une anomalie de type saillie;
la détermination, lorsque le nombre de fois où la distance de cible est en dehors de la plage de seuil est inférieur à deux et que la troisième durée est supérieure au premier seuil temporel, que le résultat de détection de la cellule cible indique une anomalie de type séparateur; et
la détermination, lorsque le nombre de fois où la distance de cible est en dehors de la plage de seuil est égal à deux et que la troisième durée toutes les fois où la distance de cible est en dehors de la plage de seuil n'est pas supérieure au premier seuil temporel mais est supérieure à un deuxième seuil temporel, que le résultat de détection de la cellule cible indique l'anomalie de type saillie ou une anomalie de type languette.

6. Procédé selon l'une quelconque des revendications 1 à 5, le procédé étant **caractérisé en ce qu'**il comprend en outre:
l'émission d'un message de notification sur la base du résultat de détection;
de préférence,
**caractérisé en ce que** le résultat de détection comprend un ou plusieurs éléments parmi un type d'anomalie, un instant d'anomalie, un nombre d'anomalies ou un modèle d'une cellule anormale;
et l'émission d'un message de notification sur la base du résultat de détection comprend:
l'affichage, via une interface d'affichage, d'au moins un élément parmi le type d'anomalie, l'instant d'anomalie, le nombre d'anomalies ou le modèle d'une cellule anormale.

7. Procédé selon l'une quelconque des revendications 1 à 5, le procédé étant **caractérisé en ce qu'**il comprend en outre:
l'acquisition (250) de données d'image de cellule dans une plage de détection d'un capteur (120) lorsque tous les résultats de détection de cellules cibles détectées pendant une durée spécifiée sont identiques, le capteur (120) étant configuré pour acquérir les données de détection de cible des cellules cibles;
la détermination (260) de données de décalage entre la cellule et le capteur (120) sur la base des données d'image de cellule; et
l'ajustement (270) d'un emplacement du capteur (120) sur la base des données de décalage.

8. Procédé selon l'une quelconque des revendications 1 à 5, le procédé étant **caractérisé en ce qu'**il comprend en outre:
l'obtention (280) d'un paramètre de type de la cellule cible;
la détermination (290) d'un emplacement cible du capteur (120) sur la base du paramètre de type; et
l'ajustement (2010) d'un emplacement du capteur (120) sur la base de l'emplacement cible.

9. Procédé selon l'une quelconque des revendications 1 à 5, **caractérisé en ce que** l'obtention de données de détection de cible d'une cellule cible comprend:
l'obtention des données de détection de cible d'un capteur (120) au cours d'un processus de déplacement de la cellule cible jusque dans une plage de détection du capteur (120).

10. Procédé selon l'une quelconque des revendications 1 à 5, **caractérisé en ce que** l'obtention de données de détection de cible d'une cellule cible comprend:
l'obtention de données de détection d'un premier côté ou d'un deuxième côté de la cellule cible détectée par le capteur (120), le premier côté étant un côté sans languette de la cellule cible, et le deuxième côté étant un côté avec languette de la cellule cible.

11. Contrôleur (110), le contrôleur (110) étant **caractérisé en ce qu'**il comprend un processeur (113) et une mémoire (111) ; la mémoire (111) stocke une instruction lisible par machine exécutable par le processeur (113) ; et, lorsqu'elle est exécutée par le processeur (113) lors du fonctionnement d'un dispositif électronique, l'instruction lisible par machine réalise les étapes du procédé selon l'une quelconque des revendications 1 à 10.

12. Système de détection de cellule, le système de détection de cellule étant **caractérisé en ce qu'**il comprend:
un capteur (120), configuré pour obtenir des données de détection de cible d'une cellule cible ; et
le contrôleur (110) selon la revendication 11, le contrôleur (110) étant connecté au capteur (120) et étant configuré pour obtenir les données de détection du capteur (120) et déterminer, sur la base des données de détection, si la cellule cible est anormale.

13. Système de détection de cellule selon la revendication 12, **caractérisé en ce que** le capteur (120) comprend un premier capteur (121) et un deuxième capteur (122),
le premier capteur (121) étant configuré pour détecter des données d'un premier côté (S1) de la cellule cible; et
le deuxième capteur (122) étant configuré pour détecter des données d'un deuxième côté (S2) de la cellule cible,
le premier côté (S1) étant un côté sans languette de la cellule cible, et le deuxième côté (S2) étant un côté avec languette de la cellule cible.

14. Système de détection de cellule selon la revendication 12, le système de détection de cellule étant **caractérisé en ce qu'**il comprend en outre un support (130);
le premier capteur (121) et le deuxième capteur (122) sont montés de manière coulissante sur le support (130); et
le contrôleur est en outre configuré pour commander le coulissement du premier capteur (121) ou du deuxième capteur (122) sur le support (130).

15. Système de détection de cellule selon la revendication 14, **caractérisé en ce qu'**une échelle graduée (140) est en outre disposée sur le support (130).
